# EUROPEAN PATENT APPLICATION

(11) **EP 4 563 516 A1**
(43) Date of publication of application: **04.06.2025**
(21) Application number: 23213687.9
(22) Date of filing: 01.12.2023
(51) Int. Cl.: B66C 13/46, B66C 23/78, B66F 17/00, G01B 11/02

(54) **COMPUTER SYSTEM AND COMPUTER-IMPLEMENTED METHOD**

(71) Applicant: VOLVO TRUCK CORPORATION, 405 08 Göteborg (SE)
(72) Inventor: BERNE, Nicolas, 436 44 ASKIM (SE); RACHIDI, Mohammed, 416 66 GÖTEBORG (SE)
(74) Representative: Ström & Gulliksson AB

(57) **Abstract**

A computer system comprising processing circuitry (702, 7500) configured to obtain, from a sensor system of a vehicle (10), target data (42A);process the target data (42A) to:

identify (46) an instability risk (4900) based on a relative movement between a member target (130, 230A, 230, 430A, 430, 430) and a surface target (140, 240A, 240B, 240, 440A, 440, 440), and initiate (48) an instability countermeasure (4600) based on the instability risk (4900).

## Description

### TECHNICAL FIELD

The disclosure relates generally to a computer system and a computer-implemented method. In particular aspects, the disclosure relates to a computer system and a computer-implemented method for a vehicle with one or more stability members. The disclosure can be applied to heavy-duty vehicles, such as trucks, buses, and construction equipment, among other vehicle types. Although the disclosure may be described with respect to a particular vehicle, the disclosure is not restricted to any particular vehicle.

### BACKGROUND

Within the field of heavy vehicles it is common to equip the vehicle with deployable stability members for engaging the ground while the heavy vehicle stands still. Such vehicles are often provided with a work attachment for performing various tasks, for example a crane or a ladder. Such work attachments impact the stability of the vehicle due to changing the center of gravity, particularly during operation of the work attachment.

The operation of the work attachment is thus associated with a risk, particularly if the ground is not very stable. An instable ground may cause the vehicle to slide or tilt uncontrollably.

### SUMMARY

According to a first aspect of the disclosure, a computer system is provided. The computer system is configured to: obtain, from a sensor system of a vehicle, target data; process the target data to identify one or more member targets associated with one or more deployed stability member of the vehicle, the one or more deployed stability member of the vehicle being configured to engage a surface, and one or more surface targets associated with the surface; an instability risk based on a relative movement between the member target and the surface target, and; initiate an instability countermeasure based on the instability risk. The first aspect of the disclosure may seek to obtain a simple and non-complex manner of identifying and counteracting instability when the one or more stability members are deployed. A technical benefit may include that an existing sensor system of the vehicle may be utilized in order to improve the safety of the vehicle when the one or more stability members are deployed.

Optionally in some examples, including in at least one preferred example, the processing circuitry is further configured to identify the instability risk by determining that a relative movement between the member target and the surface target for the deployed stability member for a set time interval is outside a predefined threshold, and in response to the relative movement between said member target and the surface target being outside said predefined threshold, determine an instability countermeasure to be initiated. A technical benefit may include that a suitable instability countermeasure may be selected based on the detected relative movement, thereby improving the safety of the vehicle.

Optionally in some examples, including in at least one preferred example, the predefined threshold is associated with a maximum change in relative distance between the member target and the surface target for one deployed stability member. A technical benefit may include that a simple and non-complex manner of controlling the stability of the vehicle is achieved.

Optionally in some examples, including in at least one preferred example, the instability countermeasure comprises causing adjustment of the position of at least one of the one or more deployed stability members based on the target data. A technical benefit may include that the computer system may adjust and counteract the instability in a rapid and direct manner.

Optionally in some examples, including in at least one preferred example, the instability countermeasure comprises causing adjustment of the one or more deployed stability members to push at least one of the one or more deployed stability members towards the surface.

Optionally in some examples, including in at least one preferred example, the vehicle further comprises a work attachment operable upon deployment of the one or more deployed stability members. The determined instability countermeasure comprises at least one of rotating the work attachment, retracting the work attachment and stopping movement of the work attachment. A technical benefit may include that the work attachment may be utilized in order to stabilize the vehicle.

Optionally in some examples, including in at least one preferred example, the processing circuitry is configured to: determine a relative movement between a member target associated with a first deployed stability member and a surface target for the first deployed stability member for a set time interval, determine a relative movement between a member target associated with a second deployed stability member and a surface target for the second deployed stability member for a set time interval, and identify an instability countermeasure based on said determined relative movements.

A technical benefit may include that an instability countermeasure may be selected for addressing a detected instability between two deployed stability members.

Optionally in some examples, including in at least one preferred example, the processing circuitry is configured to determine a relative angular movement between the first and second deployed stability member based on: the determined relative movement between the member target associated with the first deployed stability member and the surface target for the first deployed stability member, and the determined relative movement between the member target associated with the second deployed stability member and the surface target for the second deployed stability member.

The processing circuity may be further configured to identify the instability countermeasure based on the determined relative angular movement. A technical benefit may include that an instability risk may be identified with an improved precision.

Optionally in some examples, including in at least one preferred examples, the first deployed stability member is arranged at a first longitudinal side of the vehicle and the second deployed stability member is arranged at a second longitudinal side of the vehicle opposite to the first side. A technical benefit may include that a risk for a roll-out instability may be addressed.

Optionally in some examples, including in at least one preferred example, the first deployed stability member is arranged at a front portion the vehicle and the second deployed stability member is arranged at a rear portion of the vehicle opposite to the front portion. A technical benefit may include that a risk for a pitch instability may be mitigated.

Optionally in some examples, including in at least one preferred example, the member target and/or the surface target is provided as a graphical pattern identifiable by the sensor system and provided on the deployed stability member and the surface, respectively. A technical benefit may include that the operator of the vehicle is not required to position bulky physical objects in order for the processing circuitry being able to determine the relative movement.

Optionally in some examples, including in at least one preferred example, the surface target is provided at the surface and is associated with a reference position of engagement between the surface and the deployed stability member. The vehicle further comprises a work attachment operable upon deployment of the one or more deployed stability members. The processing circuitry is configured to: determine a relative movement between a member target associated with a first deployed stability member and a surface target for the first deployed stability member for a set time interval, determine a relative movement between a member target associated with a second deployed stability member and a surface target for the second deployed stability member for a set time interval, and identify an instability countermeasure based on said determined relative movements by selecting an instability countermeasure from a plurality of instability countermeasures. The instability countermeasures comprising any one of causing adjustment of the position of at least one of the one or more deployed stability members based on the target data, rotating the work attachment, retracting the work attachment, stopping movement of the work attachment and issuing an alert via a user interface of the vehicle. A technical benefit may include that a non-complex manner of mitigating the risk for dangerous instability is achieved.

According to a second aspect of the disclosure, a vehicle is provided. The vehicle comprises one or more deployed stability member, a sensor system and the computer system according to any of the examples described herein. A technical benefit may include that a more stable vehicle with a reduced risk for instability may be achieved.

Optionally in some examples, including in at least one preferred example, the sensor system comprises a camera monitoring system configured to monitor the member target and the surface target and capture image data comprising the target data. A technical benefit may include that an existing camera monitoring system such as a digital rearview/side view mirror-system may be utilized.

According to a third aspect of the disclosure, a computer-implemented method is provided. The computer-implemented method comprises: obtaining, by processing circuitry of a computer system, from a sensor system of a vehicle target data, processing the target data to identify: one or more member targets associated with one or more deployed stability member of the vehicle, the one or more deployed stability members being configured to engage a surface, and one or more surface targets associated with the surface, identifying an instability risk based on relative movement between the member target and the surface target, and initiating, by the processing circuitry, an instability countermeasure based on the instability risk. The second aspect of the disclosure may seek to obtain a simple and non-complex method of identifying and counteracting instability when the one or more stability members are deployed. A technical benefit may include that an existing sensor system of the vehicle may be utilized in order to improve the safety of the vehicle when the one or more stability members are deployed.

Optionally in some examples, including in at least one preferred example, the method may further comprise identifying the instability risk by determining, by the processing circuitry, that a relative movement between the member target and the surface target for the deployed stability member for a set time interval is outside a predefined threshold, and in response to the relative movement between said member target and the surface target being outside said predefined threshold, determining, by the processing circuitry, an instability countermeasure to be initiated. A technical benefit may include that a suitable instability countermeasure may be selected based on the detected relative movement, thereby improving the safety of the vehicle.

Optionally in some examples, including in at least one preferred examples, the method comprises: determining, by the processing circuitry, a relative movement between a member target associated with a first deployed stability member and a surface target for the first deployed stability member for a set time interval, determining, by the processing circuitry, a relative movement between a member target associated with a second deployed stability member and a surface target for the second deployed stability member for a set time interval, and identifying, by the processing circuitry, an instability countermeasure based on said determined relative movements. A technical benefit may include that an instability countermeasure may be selected for addressing a detected instability between two deployed stability members.

According to a fourth aspect of the disclosure, a computer program product for performing, when executed by the processing circuitry, the method of any of the examples described herein.

According to a fifth aspect of the disclosure, a non-transitory computer-readable storage medium is provided. The non-transitory computer-readable storage medium comprises instructions, which when executed by the processing circuitry, may cause the processing circuitry to perform the method of any of the examples described herein.

The disclosed aspects, examples (including any preferred examples), and/or accompanying claims may be suitably combined with each other as would be apparent to anyone of ordinary skill in the art. Additional features and advantages are disclosed in the following description, claims, and drawings, and in part will be readily apparent therefrom to those skilled in the art or recognized by practicing the disclosure as described herein.

There are also disclosed herein computer systems, control units, code modules, computer-implemented methods, computer readable media, and computer program products associated with the above discussed technical benefits.

### BRIEF DESCRIPTION OF THE DRAWINGS

Examples are described in more detail below with reference to the appended drawings.
**FIG. 1** is an exemplary vehicle and a system diagram of computer system according to an example.
**FIG. 2A** is an exemplary vehicle according to an example depicted in a side view.
**FIG. 2B** is an exemplary vehicle according to an example depicted in a back view.
**FIG. 2C** is an exemplary view of a system diagram of a computer system and sensor system of the vehicle of FIG. 2A-B.
**FIG. 2D** is an exemplary diagram of a control algorithm according to an example.
**FIG. 2E** is a schematic exemplary depiction of an instability countermeasure according to an example.
**FIG. 2F** is a schematic exemplary depiction of an instability countermeasure according to an example.
**FIG. 3A** is a top view of an exemplary vehicle according to an example.
**FIG. 3B** is a top view of an exemplary vehicle according to another example.
**FIG. 4A** is a view of the longitudinal sides of a vehicle according to an example.
**FIG. 4B** depicts the same view as **FIG. 4B** with surface targets and member targets according to another example.
**FIG. 4C** depicts the same view as FIG. 4A-B with surface targets and member targets according to another example.
**FIG. 4D** depicts the same view as FIG. 4A-C with surface targets and member targets according to another example.
**FIG. 4E** depicts a deployed stability member, surface target and member targets according to one example.
**FIG. 5A** is an exemplary flow chart of a method according to an example.
**FIG. 5B** is an exemplary flow chart of a method according to an example.
**FIG. 6** is an exemplary flow chart of a system according to an example.
**FIG. 7** is an exemplary flow chart of a control algorithm according to an example.
**FIG. 8** is an exemplary flow chart of a method according to an example.
**FIG. 9** is a schematic diagram of an exemplary computer system for implementing examples disclosed herein, according to an example.
**FIG. 10** is another view of FIG. 1A-B, according to an example.

### DETAILED DESCRIPTION

The detailed description set forth below provides information and examples of the disclosed technology with sufficient detail to enable those skilled in the art to practice the disclosure.

It is common that heavy vehicles are used to perform operations requiring the vehicle to stand still and remain stable while carrying a heavy and/or dynamic load. Such a load may for example stem from the operation of a work attachment such as a crane or ladder. In order to render the vehicle stationary and stable, actuatable stability members may be deployed to engage the ground. However, in cases where the ground is unstable, slippery or uneven, there may still be a risk for instability.

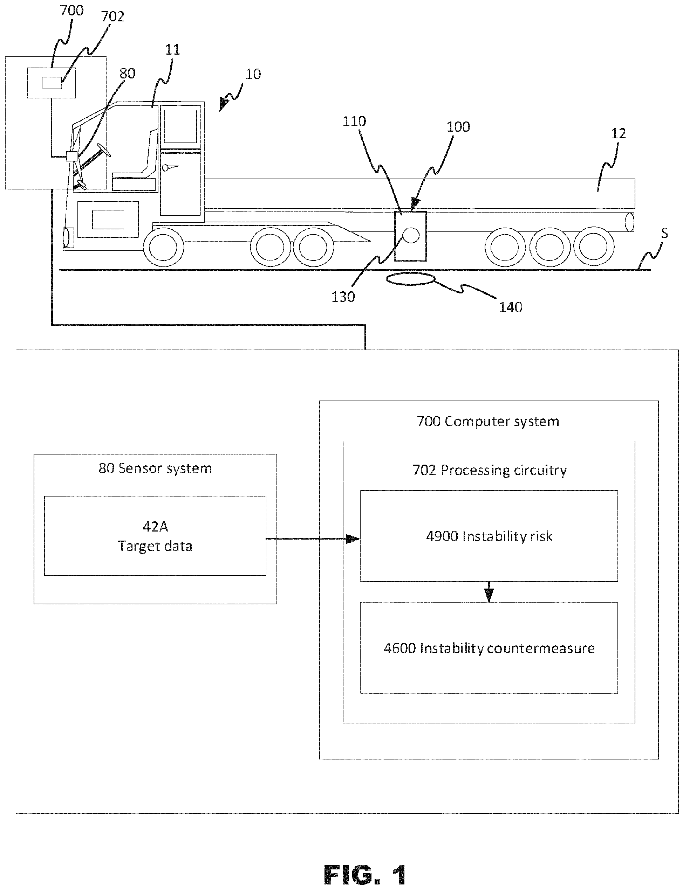

**FIG. 1** depicts aspects of a computer system and a vehicle which may address a risk for instability according to an example. The computer system **700** comprises processing circuitry **702.** The processing circuitry **702** is configured to obtain target data **42A** from a sensor system **80** of the vehicle **10.** The processing circuitry **702** is configured to process the target data **42A** to identify one or more member targets **130.** The one or more member targets **130** is associated with one or more deployed stability members **110** of the vehicle **10.** The processing circuitry **702** is configured to process the target data **42A** to identify one or more surface targets **140.** The one or more surface targets **140** is associated with the surface **S.**

The processing circuitry **702** is configured to identify an instability risk **4900** based on relative movement between the member target **130** and the surface target **140** and initiate an instability countermeasure **4600** based on the instability risk **4900.**

In one example, the processing circuitry **702** may be configured to identify the instability risk **4900** by determining the relative movement for a set time interval.

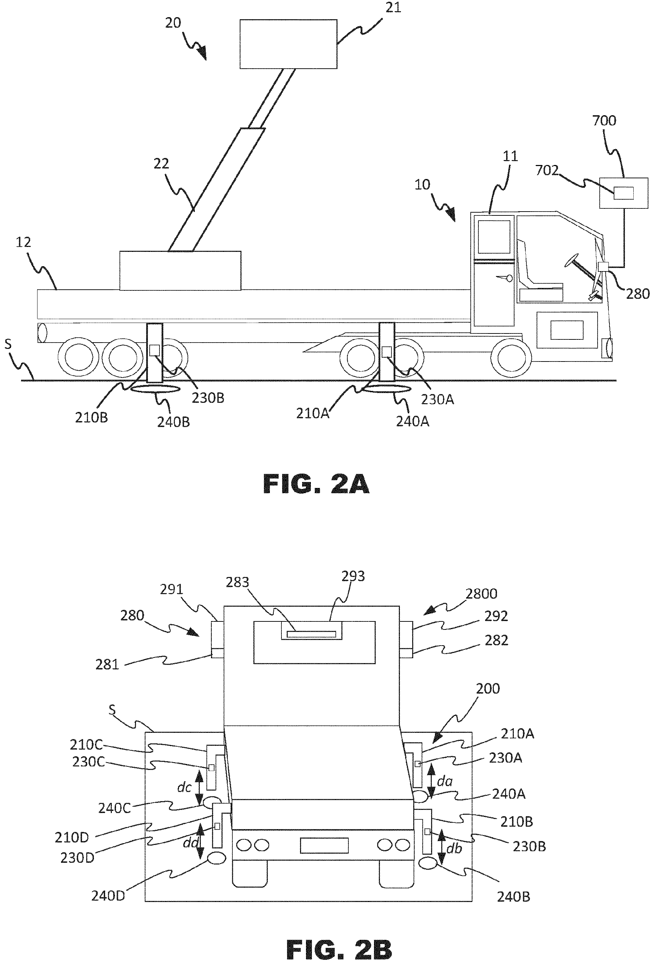

FIG. 2A-B, depicts a vehicle **10** and aspects of a computer system **700** according to an example. The vehicle **10** may comprise a work attachment **20.** The work attachment **20** may be operable upon deployment of the one or more deployed stability members **210.** The work attachment **20** may comprise a work attachment actuating mechanism **22** and a work attachment part **21.** The work attachment actuating mechanism **22** may be operatively connected to the computer system **700** to enable control of the work attachment **20.**

The work attachment actuating mechanism **22** may be hydraulic, pneumatic or electric. The work attachment actuating mechanism **22** may be configured to operate the work attachment part **21.** The work attachment part **21** may for example a ladder or a crane basket. In the depicted example, the work attachment part **21** may be a crane basket. Accordingly, the depicted work attachment **20** may be a crane.

The stability member(s) **210** may be deployed or deployable stability member(s) **210.** Upon deployment, the one or more stability members **110** may be configured to engage the surface **S.** The surface **S** may be an underlying surface onto which the vehicle **10** is positioned. The deployed stability member(s) **210** may be electrically, hydraulically or pneumatically operated. Accordingly, the deployed stability member(s) **210** may be operable by means of an electric, pneumatic actuator or hydraulic work attachment actuating mechanism **22.** The vehicle **10** may comprise any suitable number of deployed stability member(s). It may be envisioned that the vehicle **10** may comprise a single or multiple deployed stability member(s). For example, the vehicle **10** may comprise at least two deployed stability members **210.**

For each of the deployed stability members **210** a surface target **240** and a member target **230** is provided. In the depicted example, a first member target **230A** is provided on the first deployed stability member **210A** and a first surface target **240A** associated with a point of engagement between the first deployed stability member **210A** and the surface **S** is provided. Correspondingly, a second member target **230B** is provided on the second deployed stability member **210B** and a second surface target **240B** associated with a point of engagement between the second deployed stability member **210B** and the surface **S** is provided; a third member target **230C** is provided on the third deployed stability member **210C** and a third surface target **240C** associated with a point of engagement between the third deployed stability member **210C** and the surface **S** is provided; and a fourth member target **230D** is provided on the fourth deployed stability member **210D** and a fourth surface target **240D** associated with a point of engagement between the fourth deployed stability member **210D** and the surface **S** is provided. It may however be envisioned that for example one surface target may be utilized for multiple stability members such that the relative movement between a plurality of member targets relative a single surface target may be monitored.

The surface targets **240A-D** and the member targets **230A-D** may be in the form of any target suitable to be identified by the sensor system **280.** The surface targets **240A-D** and the member targets **230A-D** may be provided as protruding structures protruding relative to the surroundings, light sources, reflections, projections and/or graphical patterns. The surface targets **240A-D** may be fixed relative to the surface **S,** i.e. the surface targets **240A-D** may be stationary relative to the surface **S.** The member targets **230A-D** may be fixed relative to the deployed stability members **210A-D,** i.e. the member targets **230A-D** may be stationary relative to the deployed stability members **210A-D.** Hence, if relative movement occurs between the surface S and the deployed stability members **210A-D,** a corresponding relative movement between the member targets **230A-D** and the surface targets **240A-D** will be detected by means of the sensor system **280.**

For example, surface targets **240A-D** may be formed by objects being stationary relative to the surface **S.** In one example, the surface targets **240A-D** may be provided as protruding structures stationary relative to the surface **S** such as traffic cones, traffic signs etc. In one example, the surface targets **240A-D** may be provided as graphical patterns positioned on the surface **S.** The graphical patterns may be in the form of road markings on the surface or labelled objects positioned by an operator on the surface **S.** In one example, the surface targets **240A-D** may be in the form of lighting identifiable by the sensor system **280.** The lighting may be direct lighting such as a light source fixed relative to the surface **S** or a projection or reflection as a result of illumination by a light source.

Member targets **230A-D** may be formed by objects being fixed relative to the deployed stability members **210A-D.** In one example, the member targets **230A-D** may be provided as protruding structures fixed relative to the deployed stability members **210A-D** such as deployable markings or signs mounted to the deployed stability members **210A-D.** In one example, the member targets **230A-D** may be provided as graphical patterns positioned on the deployed stability members **210A-D.** The graphical patterns may be in the form of markings on the outer surface of the deployed stability members **210A-D** or labelled objects mounted onto the deployed stability members **210A-D.** In one example, the member targets **230A-D** may be in the form of lighting identifiable by the sensor system **280.** The lighting may be direct lighting such as a light source fixed relative to the deployed stability members **210A-D** or a projecting or reflecting element mounted to the deployed stability members **210A-D** and illuminated by a light source.

In the depicted example, the vehicle **10** comprises four deployed stability members **210.** A first deployed stability member **210A** and a second deployed stability member **210B** are arranged on opposite sides of a front portion of the vehicle **10.** Correspondingly, a third deployed stability member **210C** and a fourth deployed stability member **210D** are arranged on opposite sides of a rear portion of the vehicle **10.**

In the depicted example, each of the deployed stability members **210A-D** is provided with a member target **230A-D.** The member target **230A-D** is provided in the form of a light source directly mounted to the deployed stability member **210A-D.** The light source is directed such that the surface S is illuminated. Hence, the light source may be a downwardly directed light source. Each light source is configured to create a projection on the surface **S.** The projections on the surface **S** forms the surface targets **240A-D.**

In the depicted example, the relative movement between the surface **S** and each deployed stability member **210A-D** is monitored by means of monitoring of the relative distance between a light source mounted to each deployed stability member **210A-D** and a projection formed by said light source onto the surface **S** for each deployed stability member **210A-D.**

The processing circuitry **702** may thus be configured to identify the instability risk by determining a relative movement between the member targets **230** and the surface targets 240 for the deployed stability members **210.**

In **FIG.** 2B, the distance between the member target and surface target is depicted as a distance ***d*.** The processing circuitry **702** may thus be configured to based on the obtained target data from the sensor system **80,** determine a change in the distance ***d*** for the deployed stability members **210.** In the depicted example, the processing circuitry **702** may be configured to: determine a change in the (first) distance ***da*** between the first member target **230A** and the first surface target **240A;** determine a change in the (second) distance ***db*** between the second member target **230B** and the second surface target **240B;** determine a change in the (third) distance ***dc*** between the third member target **230C** and the third surface target **240C;** and determine a change in the (fourth) distance ***dd*** between the fourth member target **230D** and the fourth surface target **240D.**

In **FIG. 2B****,** the distance is depicted as a vertical distance. However, it may be envisioned that the surface target is not positioned directly underneath the deployed stability members **210,** whereby the distance may extend in a diagonal direction.

In the depicted example, each projection forms a surface target **240A-D.** The distances between the light sources and the projections thereby forms the distances ***da-dd.*** The sensor system **280** may thus be configured to monitor the position of the light sources and the projections forming the member targets **230A-D** and the surface targets **240A-D,** respectively.

The processing circuitry **702** may be configured to determine a relative movement between the member target **230A** associated with a first deployed stability member **210A** and a surface target **240A** for the first deployed stability member **210A** for a set time interval. The processing circuitry **702** may be configured to determine a relative movement between the member target **230A** associated with a second stability member **210B** and a surface target **240B** for the second deployed stability member **210B** for a set time interval. The processing circuitry **702** is configured to identify **46** an instability countermeasure **4600** based on the aforementioned determined relative movements.

The sensor system **280** may be operatively connected to the computer system **700.** The sensor system **280** may be in the form of any type of conventional suitable sensor system for monitoring relative movement between two components. For example, the sensor system **280** may be in the form of any type of optically based sensor system. It may be envisioned that non-optical sensor systems may be utilized. In one example, the sensor system may be in the form of a radar or LIDAR system configured to identify targets in the form of radar or LIDAR identifiable objects. Accordingly, the surface targets and the member targets may be provided as radar or LIDAR identifiable objects.

The sensor system **280** may comprise a camera monitoring system **2800.** The camera monitoring system **2800** may be configured to monitor the member target **130** and the surface target **140.** The camera monitoring system **2800** may be configured to monitor the one or more member targets **230** and the one or more surface targets **240** and capture image data comprising the target data.

In the depicted example, the vehicle **10** may comprise a digital rearview mirror 293 and/or one or more digital side mirror **291, 292.** The digital rearview mirror **293** and/or the one or more digital side mirror **291, 292** may be configured to obtain and display an image data feed from the camera monitoring system **2800.** The cameras of the camera monitoring system **2800** may be positioned at any position suitable for monitoring the deployed stability members and the surface. Accordingly, the camera monitoring system **2800** may be configured to capture an image feed of the one or more deployed stability members and the one or more surface targets. In one example, a first camera **281** may be configured to monitor a zone including a first longitudinal side of the vehicle **10.** A second camera **282** may be configured to monitor a zone including a second longitudinal side of the vehicle **10.** In the depicted example, the first camera **281** is mounted to a first side mirror **291** and the second camera **282** is mounted to a second side mirror **292** of the vehicle **10.** It may also be envisioned that a single camera may be utilized in order to monitor a zone including both said first and second longitudinal side of the vehicle **10.** For example, a centrally arranged camera **283** may be configured to monitor a zone including the first and second longitudinal side of the vehicle **10.** The centrally arranged camera **283** may be mounted to the cabin of the vehicle **10.**

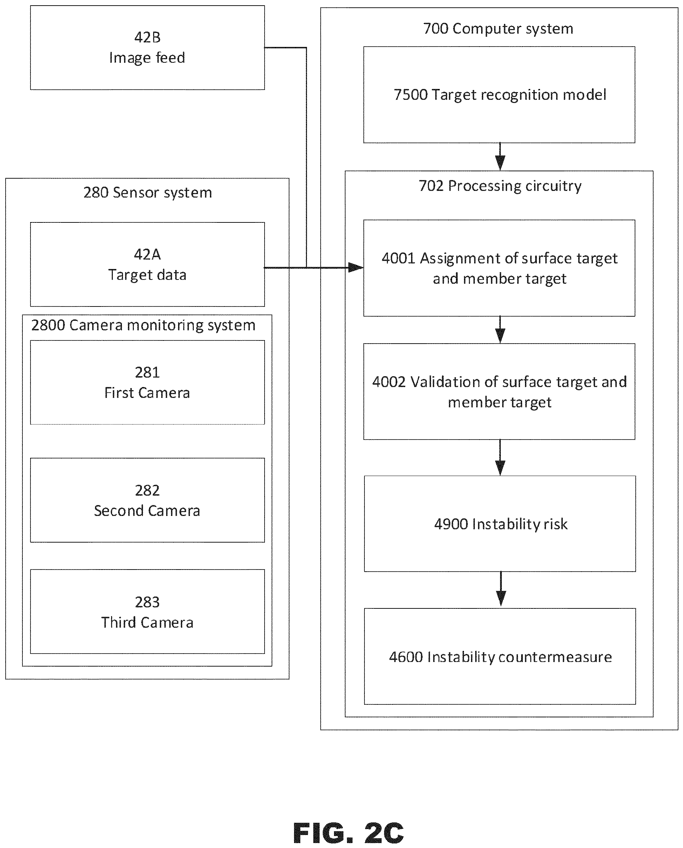

**FIG. 2C** depicts aspects of the computer system **700** and the sensor system **280.** The computer system **700** and the sensor system **280** may be the computer system **700** and the sensor system **280** described with reference to FIG. 2A-B.

The sensor system **280** includes the camera monitoring system **2800** and one or more cameras. In the depicted example, the camera monitoring system **2800** comprises three cameras, e.g. the first camera **281,** second camera **282** and the centrally arranged camera **283** herein denoted as a third camera **283.**

The target data **42A** may comprise the image feed **42B** from the camera monitoring system **2800.** The image feed **42B** may be obtained from the camera(s) of the camera monitoring system **2800,** for example, the first camera **281,** the second camera **282** and the third camera **283.**

Referencing **FIG. 2C****,** the processing circuitry **702** may be configured to obtain an image feed **42B** from the camera monitoring system **2800.** The image feed **42B** may be processed by a target recognition model **7500.** It may be envisioned that the target recognition model **7500** may be a predefined target recognition model **7500** generated by processing circuitry included in the camera monitoring system **2800.** Preferably and in the depicted example, the processing circuitry **702** of the computer system **700** may be configured to process the image feed **42B** by means of a predefined target recognition model **7500.** The target recognition model **7500** may comprise a set of algorithms for identifying the surface targets **240A-D** and the member targets **230A-D** in the image feed **42B** obtained from the camera monitoring system **2800.**

The predefined target recognition model **7500** may be a preset target recognition model **7500** configured to identify a preset type of surface targets **240A-D** and/or member targets **230A-D.** For example, the predefined target recognition model **7500** may be configured to identify a two-dimensional matrix bar code type utilized for the surface targets **240A-D** and the member targets **230A-D.** In one example, the processing circuitry **7500** may be configured to generate the predefined target recognition model **7500** by means of a calibration procedure in which the processing circuitry **702** operates in a calibration mode wherein identified objects in the image feed **42B** are assigned **4001** as surface targets **240A-D** and member targets **230A-D.**

In one example, the processing circuitry **702** may be configured to validate **4002** the assigned surface targets **240A-D** and the assigned member targets **230A-D.** Upon validation **4002** the specificity of the assigned surface targets **240A-D** and the assigned member targets **230A-D** in the image feed **42B** relative to the surroundings is determined. The validation may only be determined to be positive in response to a determined specificity for the assigned surface targets **240A-D** and the assigned member targets **230A-D** is within a predetermined threshold. The specificity may be determined based on an evaluation model of the contrast between the surroundings and the assigned surface targets **240A-D** and the assigned member targets **230A-D,** respectively in the image feed **42B.** The validation **4002** may be particularly advantageous in cases where surface targets **240A-D** and member targets **230A-D** with a generally lower specificity are utilized.

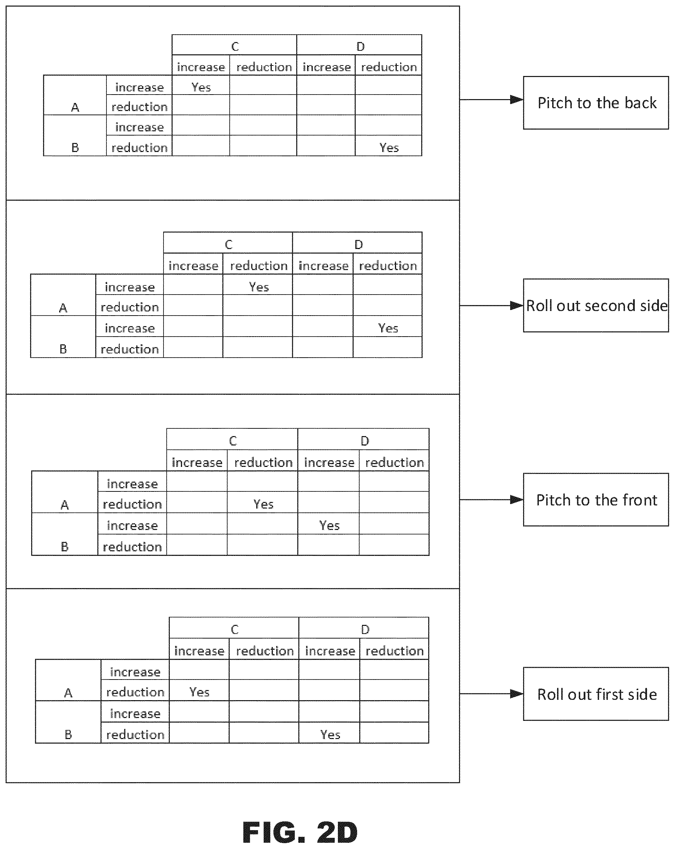

**FIG. 2D** schematically depicts a control algorithm for determining the instability risk. The processing circuitry **702** may be configured to determine a relative angular movement between a first **210A-D** and second deployed stability member **210A-D.** The angular relative movement between the first **210A-D** and second deployed stability member **210A-D** is determined based on the determined relative movement between a member target **230A-D** associated with the first deployed stability member **210A-D** and the surface target **240A-D** for the first deployed stability member **210A-D** and the determined relative movement between the member target **230A-D** associated with the second deployed stability member **210A-D** and the surface target **240A-D** for the second deployed stability member **210A-D.** The processing circuitry **702** is further configured to identify the instability countermeasure based on the determined relative angular movement.

In the example depicted in **FIG. 2C****,** the relative angular movement between the first, second, third and fourth deployed stability member **210A-D** is determined based on the relative movement between the member target **230A-D** and the surface target **240A-D** for each of the stability deployed stability members **210A-D.** A matrix for identifying the instability risk is depicted. **A** corresponds to the change in the distance ***da*** between the first member target **230A** and the first surface target **240A; B** corresponds to the change in distance ***db*** between the second member target **230B** and the second surface target **240B; C** corresponds to the change in distance ***dc*** between the third member target **230C** and the third surface target **240C;** and **D** corresponds to the change in distance ***dd*** between the fourth member target **230D** and the fourth surface target **240D.** An instability risk may be identified in case the changes in the aforementioned distances indicates any one of a pitch to the front of the vehicle, a pitch to the back of the vehicle, a roll out to a first side of the vehicle, a roll out to second side of the vehicle.

In the first matrix, the processing circuitry has determined that the distances ***da*** and ***dc*** has increased for a predefined time interval while the distances ***db*** and ***dd*** has decreased for the same predefined time interval. This indicates that the vehicle has started to pitch backwards. Accordingly, an instability risk may be identified.

In the second matrix, the processing circuitry has determined that the distances ***da*** and ***db*** has increased for a predefined time interval while the distances ***dc*** and ***dd*** has decreased for the same predefined time interval. This indicates that the vehicle has started to roll out to the second side, e.g. has begun to tilt about its longitudinal center axis towards the second side. Accordingly, an instability risk may be identified.

In the third matrix, the processing circuitry has determined that the distances ***db*** and ***dd*** has increased for a predefined time interval while the distances ***da*** and ***dc*** has decreased for the same predefined time interval. This indicates that the vehicle has started to pitch forwards. Accordingly, an instability risk may be identified.

In the fourth matrix, the processing circuitry has determined that the distances ***dc*** and ***dd*** has increased for a predefined time interval while the distances ***da*** and ***db*** has decreased for the same predefined time interval. This indicates that the vehicle has started to roll out to the first side, e.g. has begun to tilt about its longitudinal center axis towards the first side. Accordingly, an instability risk may be identified.

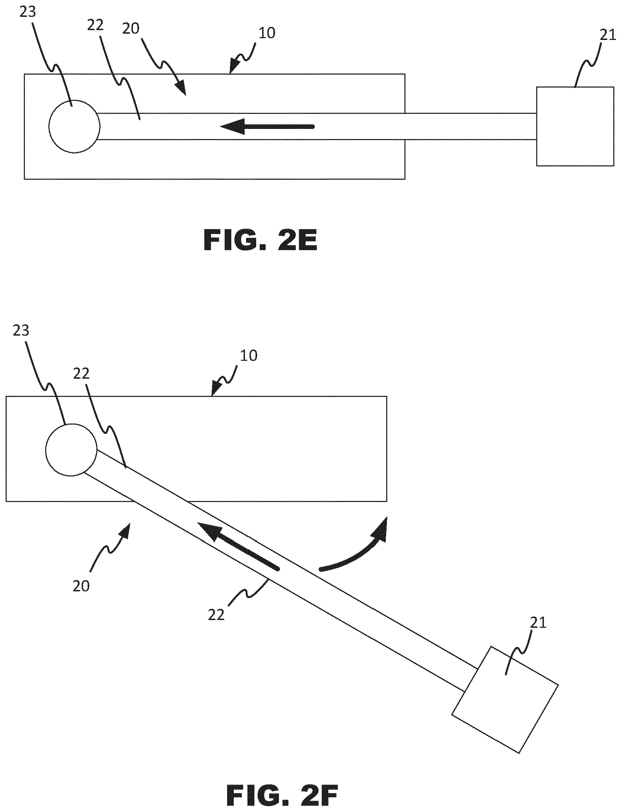

FIG. 2E-F, depicts examples of instability countermeasures to be performed based on the determined instability risk. The determined instability countermeasure may comprise at least one of rotating the work attachment **20,** retracting the work attachment **20** and stopping movement of the work attachment **20.**

In **FIG. 2E****,** an instability risk in the form of a pitch to the back or to the front has been identified. In order to address the pitching, the work attachment **20** is retracted. The attachment part **21** is actuated by the work attachment actuating mechanism **22** to cause the work attachment part **21** to move to its non-extended position. Thereby, the center of gravity of the vehicle **10** is shifted and the pitching may be mitigated.

In **FIG. 2F****,** an instability risk in the form of a roll out to the first or second side has been identified. In order to address the roll out, the work attachment **20** is rotated. The attachment part **21** may be rotated by means of a rotational work attachment drive member **23** configured to rotate the work attachment **20** relative a horizontal axis. By rotating the work attachment **20,** the center of gravity is shifted and the roll out may be mitigated. Notably, this may be combined with retraction of the work attachment **20** in order to ensure that the instability risk has been addressed.

The computer system may be operatively connected to a work attachment control system configured to control the work attachment. The computer system may be configured to initiate the instability countermeasure by means of transmitting data to the work attachment control system to cause operation of the work attachment.

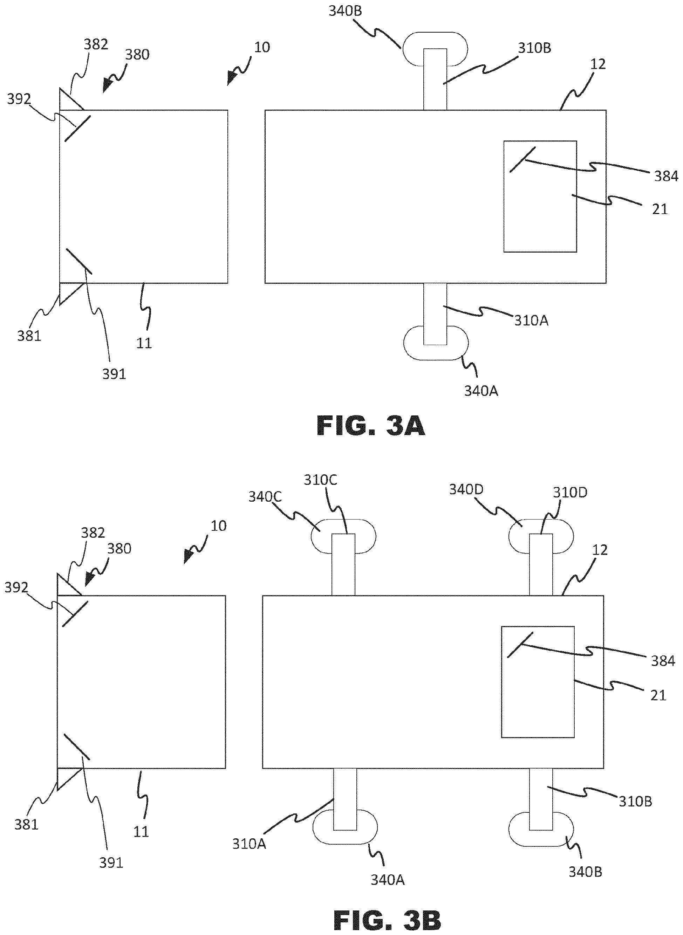

FIG. 3A-B depicts vehicles and aspects of a computer system according to another example. The vehicles **10** depicted in FIG. 3A-B comprise two and four deployed stability members. A first deployed stability member **310A** may be arranged at the first longitudinal side of the vehicle **10.** A second deployed stability member **310B** may be arranged at the second longitudinal side of the vehicle **10** opposite to the first. Alternatively or additionally, a first deployed stability member **310A** may be arranged at a front portion of the vehicle **10** and a second deployed stability member **310** may be arranged at a rear portion of the vehicle **10.**

The vehicle **10** may comprise a user interface **384.** The user interface **384** may be operatively connected to the computer system **700.** In one example, an instability countermeasure may be to issue an alert via said user interface **384.** In one example, the user interface **384** may be arranged in the work attachment part **21.** Thereby, the alert may be provided to the user while the user is operating the work attachment **20.** In the depicted example, the user interface **384** may be provided as a display unit arranged in the work attachment part **21.**

It may however also be envisioned that the user interface **384** may comprise the digital side mirrors **381, 381** and/or the digital rearview mirrors **391, 392,** whereby an instability countermeasure may comprise issuing an alert via the displays of said digital side mirrors **381, 381** and/or digital rearview mirrors **391, 392.**

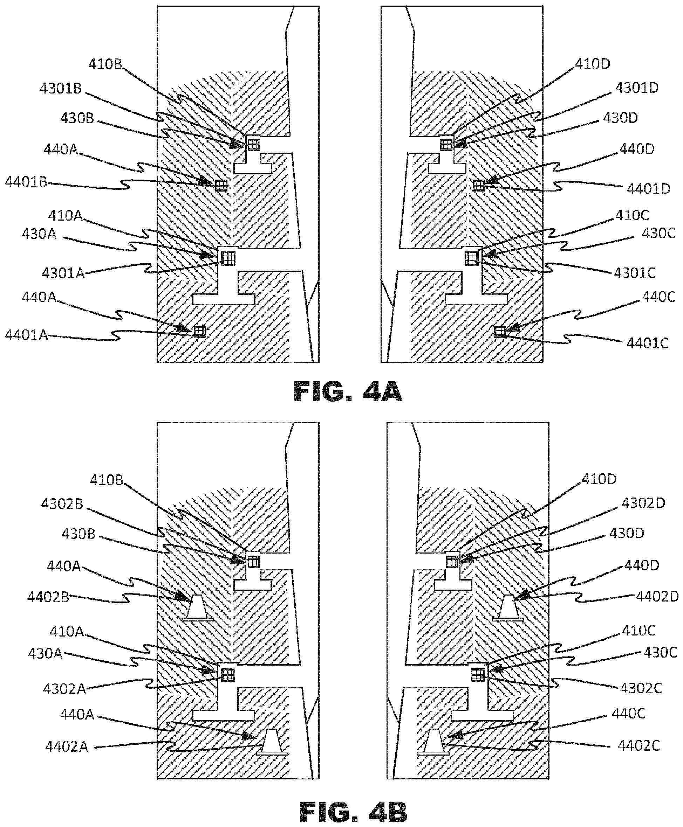

FIG. 4A-E depicts a backward view from the front of the vehicle. FIG. 4A-E, depicts alternative examples of surface targets and member targets which may be utilized to identify the instability risk. In **FIG. 4A****,** the member targets **430A-D** are provided as graphical patterns **4301A-D.** Similarly, the surface targets **440A-D** are provided as graphical patterns **4401A-D.** The graphical pattern may be identifiable by the sensor system and may be provided on the deployed stability members **410A-D** and the surface **S,** respectively. The graphical patterns may provided as a labelled elements positioned on the surface **S** or attached to the deployed stability members **410A-D.** It may however also be envisioned that the graphical patterns are etched onto the deployed stability members **410A-D.** Numerous graphical patterns are available for such a purpose. Advantageously, the graphical pattern may be in the form of bar code. The bar code may be a two-dimensional matrix bar code such as for example a QR-code, associated with an identifier which in turn may be associated with the deployed stability member and point of engagement between the surface and the deployed stability member. In one example, the two-dimensional matrix bar code may be in the form of an augogram. As the skilled person is aware, an augogram is a computer generated image configured to provide coordinates and/or interest points in an image feed.

In **FIG. 4B****,** the member targets **430A-D** are provided as graphical patterns **4302A-D** while the surface targets **440A-D** are provided as physical deployable objects **4402A-D.** In the depicted example, the surface targets **440A-D** are provided as traffic cones. A physical deployable object may be provided in the proximity of each deployed stability member **410A-D.**

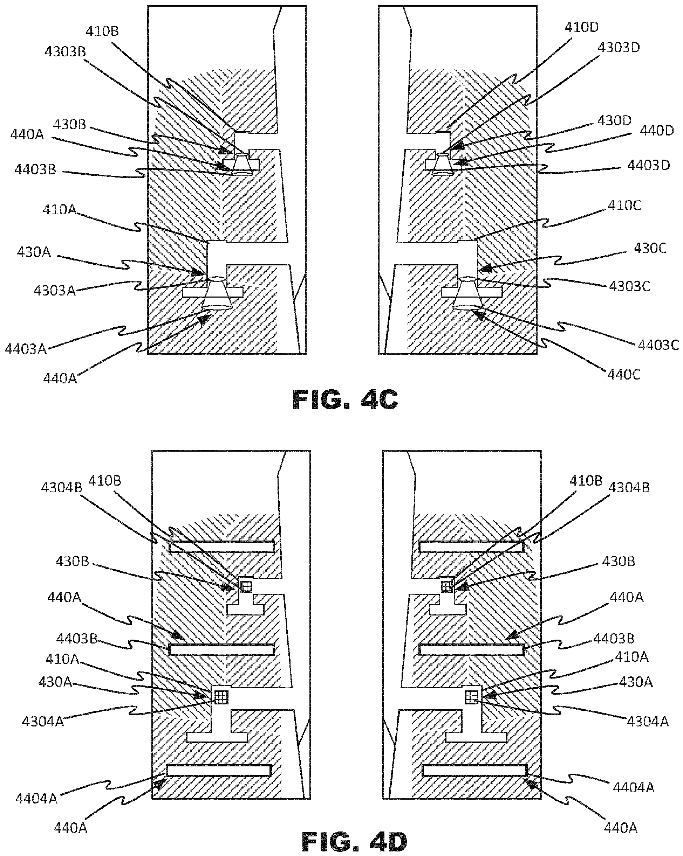

In one example, the physical deployable objects may be provided with graphical patterns to differentiate between each surface target **440A-D.** In the depicted example, the physical deployable objects are not provided with any graphical pattern. According to such an example, each physical deployable object may be assigned as a surface target **440A-D** upon the processing circuitry **702** operating in the calibration mode. In one example, the each physical deployable object may be assigned as a surface target **440A-D** and be assigned to a corresponding member target **430A-D.**In **FIG. 4C****,** the member target **430A-D** are provided as light sources **4303A-D** while the surface targets **430A-D** are provided as light projections or reflections **4403A-D.** The light sources **430A-D** may be mounted to the deployed stability members **410A-D.** The light sources may be identifiable by the sensor system. The projections formed by the light-sources **4303A-D** on the surface **S** may form the light projections or reflections **4403A-D.** Utilizing light sources, reflections and projections may be particularly advantageous as it does not require the operator to manually position member targets or surface targets. Furthermore, light sources, reflections and projections may be identifiable by the sensor system even in the dark, allowing for a more versatile manner of monitoring the deployed stability members.

The light sources **4303A-D** may be directed such that the surface **S** is illuminated. Accordingly, the light sources **4303A-D** may arranged to be angled at least partially downwards towards the surface **S.**

In one example, the member target **430A-D** and/or the surface target **440A-D** may be provided as reflectors. The reflectors may be configured to be illuminated by a light source and thereby be identifiable by the sensor system of the vehicle. Advantageously, the member target **430A-D** is provided as a light source or reflector while the surface target **440A-D** is provided as a projection. This allows for the vehicle to be provided with a built-in light source which makes the process of setting up the targets less complex and faster. In one example, the vehicle may be provided with the light source configured to illuminate the reflectors.

In **FIG. 4D****,** the member targets **430A-D** are provided as graphical patterns **4302A-D** while the surface targets **440A-D** are provided as physical stationary objects **4404A-D.** In the depicted example, the surface targets **440A-D** are provided as road markings on the surface **S.** Notably, the road markings may be pre-existing markings and a single road marking may be utilized as a surface target for a plurality of deployed stability members **410A-D.**

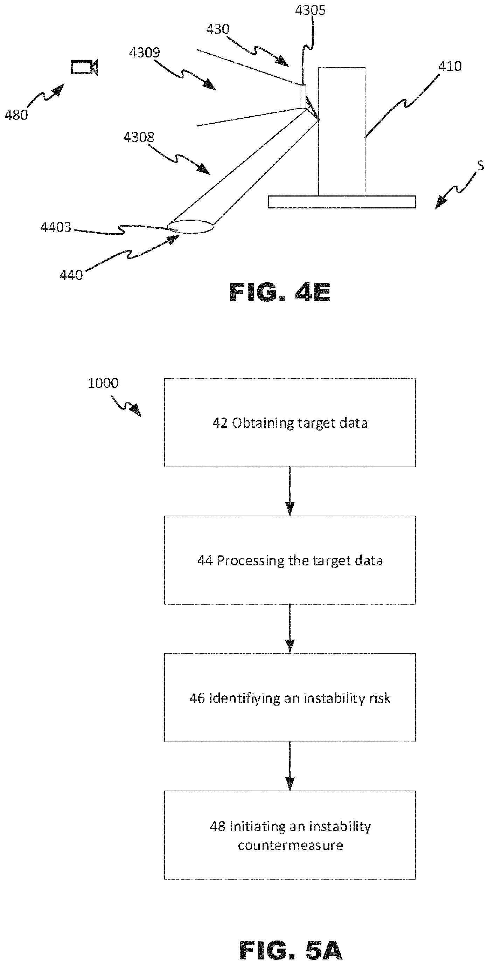

**FIG. 4E** aspects of a system according to an example. The deployed stability member **410** is provided with a member target **430.** Further, a surface target **440** is provided on the surface **S.** The deployed stability member **410** is provided with a light source **4305..** The light source **4305** is configured to emit a first light **4308** onto the ground such that a projection **4305** in the form of a first light pattern is formed on the ground. The projection thereby constitutes the surface target **440.** The light source **4305** may be further configured to emit a second light **4309.** The light source **4305** may be configured to emit the second light **4309** in a direction extending at least partially parallel with the surface **S** and preferably in a direction towards the sensor system **480,** i.e. a sensor of the sensor system **480.** The second light **4309** thus forms a direct light identifiable by the sensor system **480,** The second light **4309** may form a light pattern identifiable by the sensor system **480.** The light source **4305** may be arranged in a light module. The light module may be configured to provide direct or indirect lighting. The light module may be mounted to the deployed stability member **410.**

To improve accuracy, the first light **4308** and the second light **4309** may each form a light pattern identifiable by the sensor system **480.** In the depicted example, the light source **4305** emits circular first and second lights thereby forming a circular light patterns. It may however be envisioned that other light patterns are emitted such as crosses, lines, graphic symbols etc. Compared to projections and lighting stemming from a unidirectional light source, light forming a light pattern allows for an improved accuracy due to the clearly defined light patterns being more easily distinguishable by the sensor system **480.**

**FIG. 5A** depicts a computer-implemented method according to an example. The method **1000** comprises obtaining **42,** by the processing circuitry **702** of the computer system **700** (depicted in FIG. 1A-B), target data **42A** from the sensor system of the vehicle. The method **1000** comprises processing **44,** the target data **42A** to identify the one or more member targets **130, 230, 430** associated with the one or more deployed stability members **110, 210, 310, 410** of the vehicle **10** and one or more surface targets associated with the surface **S.** The method **1000** comprises identifying **46** an instability risk **4900** based on relative movement between the member target **130, 230, 430** and the surface target **140, 240, 340, 440** and initiating **48,** by the processing circuitry **702,** an instability countermeasure **4600** based on the instability risk.

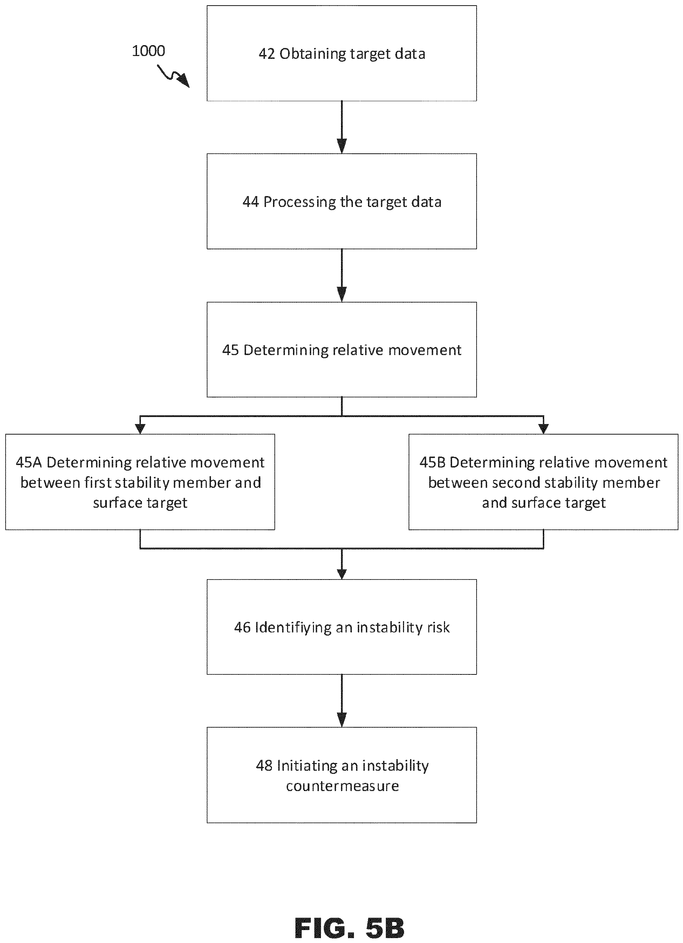

**FIG. 5B** depicts a system diagram of an exemplary computer-implemented method. The method **1000** may comprise identifying the instability risk **4900,** by determining **45,** by the processing circuitry **702,** that a relative movement between the member target **130, 230, 430** and the surface target **140, 240, 340, 440** for the deployed stability member **110, 210, 310, 410** for a set time interval is outside a predefined threshold. The method **1000** may further comprise to in response to the relative movement between the member target **130, 230, 430** and the surface target **140, 240, 340, 440** being outside said predefined threshold, determining, by the processing circuitry **702,** an instability countermeasure **4600** to be initiated **46.** In one example, the method **1000** may comprise determining **45A,** by the processing circuitry **702,** a relative movement between a member target **130, 230, 430** associated with a first deployed stability member **110, 210, 310, 410** and a surface target **240, 340, 440** for the first deployed stability member **110, 210, 310, 410** for a set time interval. The method **1000** may further comprise determining **45B,** by the processing circuitry **702,** a relative movement between a member target **130, 230, 430** associated with a second deployed stability member **110, 210, 310, 410** and a surface target **240, 340, 440** for the second deployed stability member **110, 210, 310, 410** for a set time interval. The method **1000** may comprise identifying **46,** by the processing circuitry **702,** an instability countermeasure **4600** based on said determined relative movements.

The processing circuitry **702** may be configured to obtain **42** the target data **42A** from the sensor system **80, 280, 380, 480** and process **44** the target data **42A** to identify the one or more member targets **130, 230, 430** and the one or more surface targets **140, 240, 340, 440.** The processing circuitry **702** may be further configured to identify **46** the instability risk and initiate **48** the instability countermeasure **4600** based on the instability risk. The processing circuitry **702** may be configured to perform the aforementioned methods.

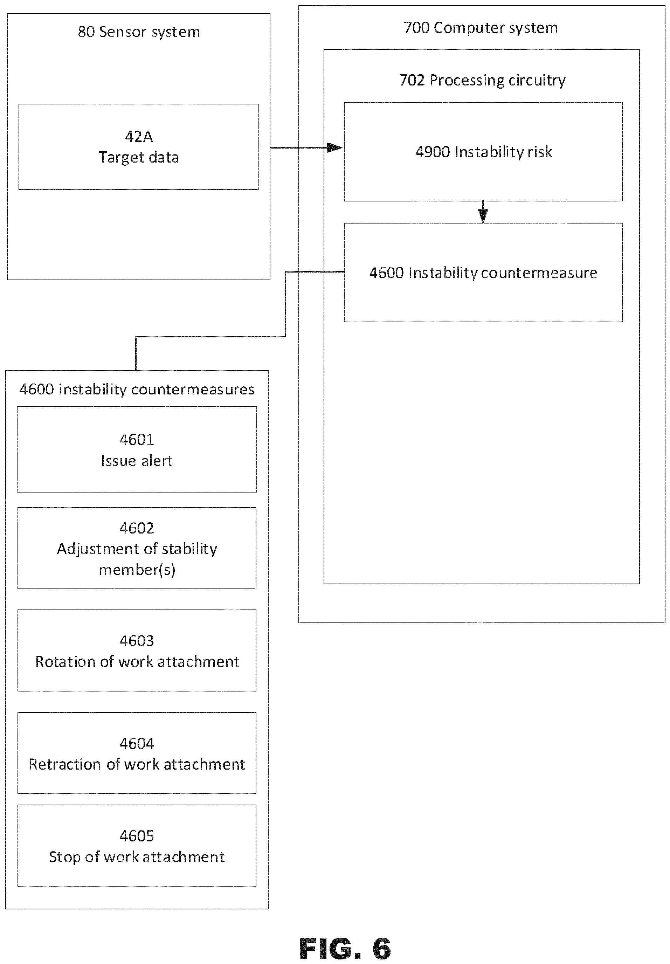

**FIG. 6** depicts aspects of the present disclosure according to an example. The processing circuitry **702** may be configured to determine an instability countermeasure **4600** based on the determined instability risk **4900.** As aforementioned, the instability countermeasure **4600** may comprise any one of rotating **4603** the work attachment, retracting **4604** the work attachment and stopping **4605** the work attachment. In one example, the instability countermeasure **4600** may comprise issuing **4601** an alert via a user interface of the vehicle. The processing circuitry **702** may thus be configured to issue said alert via the user interface. The user interface may be any type of user interface suitable, such as a visual or tactile user interface.

In one example, the instability countermeasure **4600** may comprise causing adjustment **4602** of the one or more deployed stability members of the vehicle. The adjustment may be based on the target data **42A.** The processing circuitry **702** may thus be configured to cause adjustment of the one or more deployed stability members based on the target data **42A.** In one example, said instability countermeasure **4600** may comprise causing adjustment of the one or more deployed stability members to push at least one of the one or more deployed stability members towards the surface.

The instability countermeasure of causing adjustment **4602** of the one or more deployed stability member may be particularly in cases of acute instability. Hence, said instability countermeasure may be suited to address fast variations in the relative distance between the member target and the surface target for the one or more deployed stability member. Accordingly, the processing circuitry **702** may be configured to determine the instability countermeasure of causing adjustment **4602** in response to the relative movement of the member target and surface target of the one or more deployed stability members exceeding a predefined maximum distance for a predefined time interval.

The processing circuitry **702** may be configured to based on the determined instability risk **4900** select an instability countermeasure **4600** from a plurality of instability countermeasures. The plurality of instability countermeasure may be considered a plurality of predefined instability countermeasures. Based on the determined instability risk **4900,** one or more instability countermeasures may be selected and the vehicle may be operated accordingly.

The instability countermeasure may be selected based on the severity of the determined instability risk. The severity may be associated with how fast the relative distance between member target and surface target changes. Advantageously, the instability countermeasure of adjusting the deployed stability members may be selected in response to a determined risk of sever instability while the instability countermeasure of issuing an alert may be selected in response to a determined risk of less sever instability. The rotating, stopping and/or retracting of the work attachment may be selected as the instability countermeasure for cases of a determined risk of intermediate severity of instability.

The severity of the instability may be associated with a change in relative distance between the member target and surface target for a set time interval. As aforementioned the countermeasure of instability countermeasure may be selected in response to the relative movement between the member target and the surface target exceeding a predefined maximum distance for a predetermined time interval. The instability countermeasure of issuing an alert may correspondingly be selected in response to the relative movement between the member target and the surface target exceeding a predefined maximum distance for a predetermined time interval. The time interval may be longer than the predetermined time interval associated with the selection of the instability countermeasure of adjusting the deployed stability member(s). Additionally or alternatively, the predefined maximum distance may be shorter than the predefined maximum distance associated with the selection of the instability countermeasure of adjusting the deployed stability member(s). Hence, the instability countermeasure may selected based on the severity of the determined instability risk.

The instability countermeasure of retracting, stopping and/or rotating the work attachment may be selected in cases of an intermediate instability. Accordingly, said instability countermeasure(s) may be selected in response to the relative movement between the member target and the surface target exceeding a predefined maximum distance for a predetermined time interval. The time interval may be longer than the time predetermined time interval associated with the selection of the instability countermeasure of adjusting the deployed stability member(s) and shorter than the time interval associated with the instability countermeasure of issuing an alert. Additionally or alternatively, the predefined maximum distance may be shorter than the predefined maximum distance associated with the selection of the instability countermeasure of adjusting the deployed stability member(s) and longer than the predefined maximum distance associated with the selection of the instability countermeasure of issuing an alert.

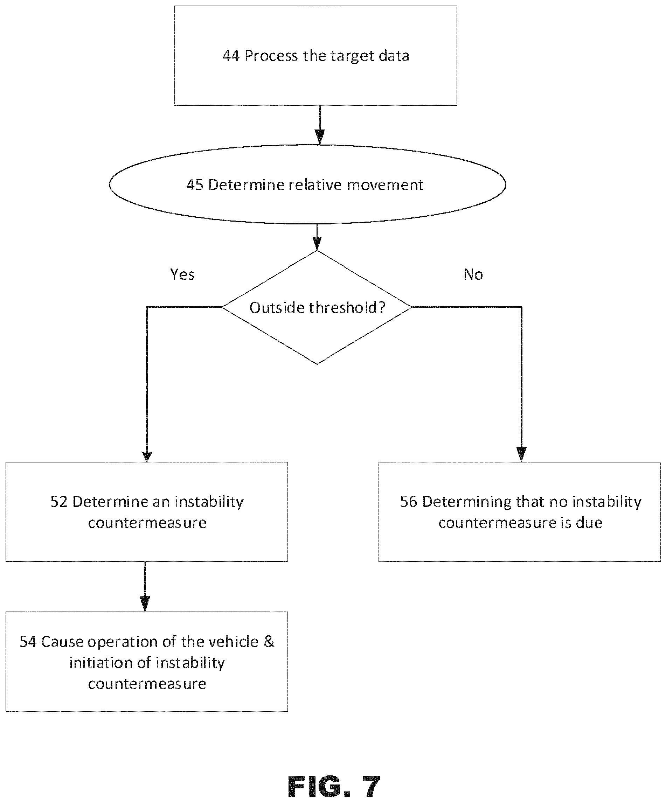

**FIG. 7** depicts aspects of the present disclosure according to an example. The processing circuitry **702** may be configured to identify **46** the instability risk **4900** by determining **45** a relative movement between the member target and the surface target for a deployed stability member and by determining that said relative movement for a set time interval is outside a predefined threshold.

In response to the relative movement being outside of said predefined threshold, an instability countermeasure to be initiated may be determined **52.** Accordingly, if the relative movement is determined to be outside the predefined threshold, an instability risk is determined and a suitable instability countermeasure is subsequently determined. Upon determination of the instability countermeasure, the processing circuitry **702** may be configured to cause operation of the vehicle and initiation of the instability countermeasure. The predefined threshold may be associated with a maximum change in relative distance between the member target and the surface target for one deployed stability member. In an example wherein the vehicle comprises a plurality of deployed stability members, the relative distance for each deployed stability member may be determined. Further, each deployed stability member may be associated with a predefined threshold. Preferably, the threshold is the same for each deployed stability member. However, this is not required.

In one example, the processing circuitry **702** may be configured to operate in a calibration mode. In the calibration mode, an initial relative distance between the member target and the surface target for each of the deployed stability members is determined. The predefined threshold may be determined based on said initial relative distance. Preferably, the predefined threshold may be determined such that only a limited increase and decrease of the relative distance is allowed before it is determined that there is an instability risk.

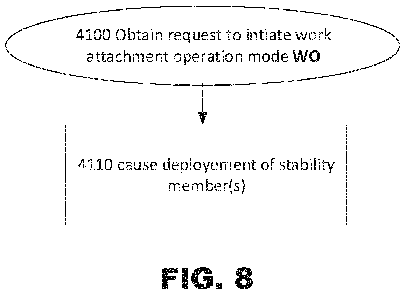

**FIG. 8** depicts aspects of the present disclosure according to an example. The processing circuitry **702** may be configured to obtain **4100** a request to initiate a work attachment operation mode **WO.** In the work attachment operation mode **WO,** the work attachment **20** is operable.

In response to the obtaining the request to initiate the work attachment operation mode **WO,** the processing circuitry **702** may be configured to cause deployment **4110** of the one or more stability member.

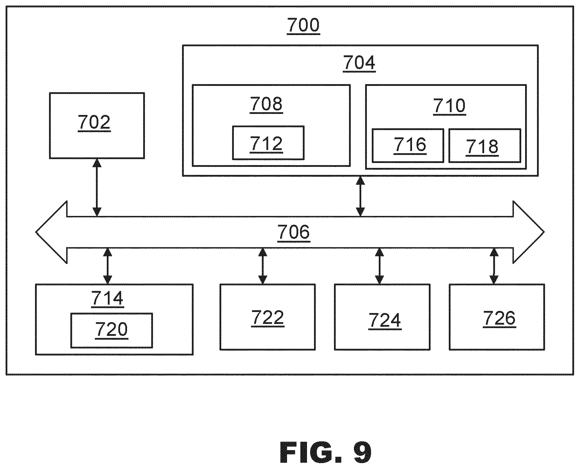

**FIG. 9** is a schematic diagram of a computer system **700** for implementing examples disclosed herein. The computer system **700** is adapted to execute instructions from a computer-readable medium to perform these and/or any of the functions or processing described herein. The computer system **700** may be connected (e.g., networked) to other machines in a LAN (Local Area Network), LIN (Local Interconnect Network), automotive network communication protocol (e.g., FlexRay), an intranet, an extranet, or the Internet. While only a single device is illustrated, the computer system **700** may include any collection of devices that individually or jointly execute a set (or multiple sets) of instructions to perform any one or more of the methodologies discussed herein. Accordingly, any reference in the disclosure and/or claims to a computer system, computing system, computer device, computing device, control system, control unit, electronic control unit (ECU), processor device, processing circuitry, etc., includes reference to one or more such devices to individually or jointly execute a set (or multiple sets) of instructions to perform any one or more of the methodologies discussed herein. For example, control system may include a single control unit or a plurality of control units connected or otherwise communicatively coupled to each other, such that any performed function may be distributed between the control units as desired. Further, such devices may communicate with each other or other devices by various system architectures, such as directly or via a Controller Area Network (CAN) bus, etc.

The computer system **700** may comprise at least one computing device or electronic device capable of including firmware, hardware, and/or executing software instructions to implement the functionality described herein. The computer system **700** may include processing circuitry **702** (e.g., processing circuitry including one or more processor devices or control units), a memory **704,** and a system bus **706.** The computer system **700** may include at least one computing device having the processing circuitry **702.** The system bus **706** provides an interface for system components including, but not limited to, the memory **704** and the processing circuitry **702.** The processing circuitry **702** may include any number of hardware components for conducting data or signal processing or for executing computer code stored in memory **704.** The processing circuitry **702** may, for example, include a general-purpose processor, an application specific processor, a Digital Signal Processor (DSP), an Application Specific Integrated Circuit (ASIC), a Field Programmable Gate Array (FPGA), a circuit containing processing components, a group of distributed processing components, a group of distributed computers configured for processing, or other programmable logic device, discrete gate or transistor logic, discrete hardware components, or any combination thereof designed to perform the functions described herein. The processing circuitry **702** may further include computer executable code that controls operation of the programmable device.

The system bus **706** may be any of several types of bus structures that may further interconnect to a memory bus (with or without a memory controller), a peripheral bus, and/or a local bus using any of a variety of bus architectures. The memory **704** may be one or more devices for storing data and/or computer code for completing or facilitating methods described herein. The memory **704** may include database components, object code components, script components, or other types of information structure for supporting the various activities herein. Any distributed or local memory device may be utilized with the systems and methods of this description. The memory **704** may be communicably connected to the processing circuitry **702** (e.g., via a circuit or any other wired, wireless, or network connection) and may include computer code for executing one or more processes described herein. The memory **704** may include non-volatile memory **708** (e.g., read-only memory (ROM), erasable programmable read-only memory (EPROM), electrically erasable programmable read-only memory (EEPROM), etc.), and volatile memory **710** (e.g., random-access memory (RAM)), or any other medium which can be used to carry or store desired program code in the form of machine-executable instructions or data structures and which can be accessed by a computer or other machine with processing circuitry **702.** A basic input/output system (BIOS) **712** may be stored in the non-volatile memory **708** and can include the basic routines that help to transfer information between elements within the computer system **700.**

The computer system **700** may further include or be coupled to a non-transitory computer-readable storage medium such as the storage device **714,** which may comprise, for example, an internal or external hard disk drive (HDD) (e.g., enhanced integrated drive electronics (EIDE) or serial advanced technology attachment (SATA)), HDD (e.g., EIDE or SATA) for storage, flash memory, or the like. The storage device **714** and other drives associated with computer-readable media and computer-usable media may provide non-volatile storage of data, data structures, computer-executable instructions, and the like.

Computer-code which is hard or soft coded may be provided in the form of one or more modules. The module(s) can be implemented as software and/or hard-coded in circuitry to implement the functionality described herein in whole or in part. The modules may be stored in the storage device **714** and/or in the volatile memory **710,** which may include an operating system **716** and/or one or more program modules **718.** All or a portion of the examples disclosed herein may be implemented as a computer program **720** stored on a transitory or non-transitory computer-usable or computer-readable storage medium (e.g., single medium or multiple media), such as the storage device **714,** which includes complex programming instructions (e.g., complex computer-readable program code) to cause the processing circuitry **702** to carry out actions described herein. Thus, the computer-readable program code of the computer program **720** can comprise software instructions for implementing the functionality of the examples described herein when executed by the processing circuitry **702.** In some examples, the storage device **714** may be a computer program product (e.g., readable storage medium) storing the computer program **720** thereon, where at least a portion of a computer program **720** may be loadable (e.g., into a processor) for implementing the functionality of the examples described herein when executed by the processing circuitry **702.** The processing circuitry **702** may serve as a controller or control system for the computer system **700** that is to implement the functionality described herein.

The computer system **700** may include an input device interface **722** configured to receive input and selections to be communicated to the computer system **700** when executing instructions, such as from a keyboard, mouse, touch-sensitive surface, etc. Such input devices may be connected to the processing circuitry **702** through the input device interface **722** coupled to the system bus **706** but can be connected through other interfaces, such as a parallel port, an Institute of Electrical and Electronic Engineers (IEEE) 1394 serial port, a Universal Serial Bus (USB) port, an IR interface, and the like. The computer system **700** may include an output device interface **724** configured to forward output, such as to a display, a video display unit (e.g., a liquid crystal display (LCD) or a cathode ray tube (CRT)). The computer system **700** may include a communications interface **726** suitable for communicating with a network as appropriate or desired.

The operational actions described in any of the exemplary aspects herein are described to provide examples and discussion. The actions may be performed by hardware components, may be embodied in machine-executable instructions to cause a processor to perform the actions, or may be performed by a combination of hardware and software. Although a specific order of method actions may be shown or described, the order of the actions may differ. In addition, two or more actions may be performed concurrently or with partial concurrence.

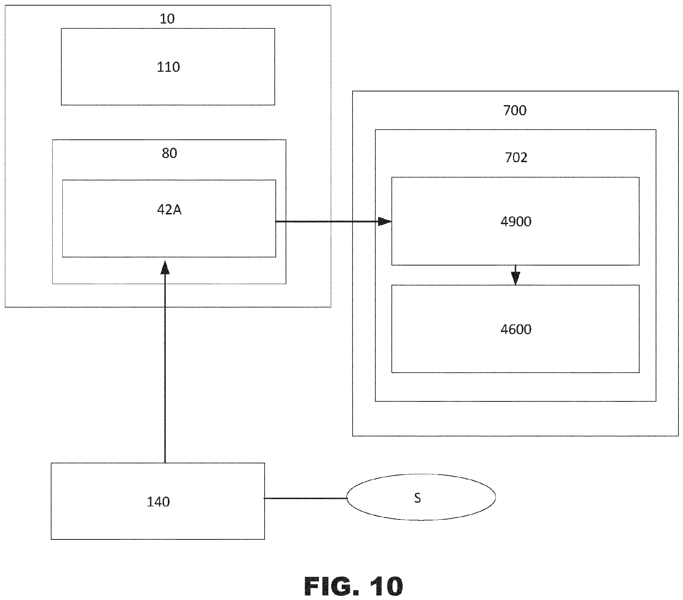

**FIG. 10** is another view of **FIG. 1****,** according to an example. The computer system **700** comprises processing circuitry **702.** The processing circuitry **702** is configured to obtain, from the sensor system **80** of the vehicle **10,** target data **42A.** The processing circuitry **702** is configured to process the target data **42A** to identify the one or more member targets **130** associated with the one or more deployed stability member **110** of the vehicle **10.** The one or more deployed stability member **110** of the vehicle **10** are configured to engage the surface **S,** and the one or more surface targets **140** associated with the surface **S.**

The processing circuitry **702** is configured to identify an instability risk based on a relative movement between the member target **130** and the surface target **140** and initiate an instability countermeasure **4600** based on the instability risk **490).**

**Example 1:** A computer system **(700)** comprising processing circuitry **(702)** configured to: obtain, **(42)** from a sensor system **(80, 280, 380, 480)** of a vehicle **(10),** target data **(42A);** process **(44)** the target data **(42A)** to identify: one or more member targets **(130, 230, 430)** associated with one or more deployed stability member **(110, 210, 310, 410)** of the vehicle **(10),** the one or more deployed stability member **(110, 210, 310, 410)** of the vehicle **(10)** being configured to engage a surface **(S),** and one or more surface targets **(140, 240, 340, 440)** associated with the surface **(S),** identify **(46)** an instability risk (4900) based on a relative movement between the member target **(130, 230, 430)** and the surface target **(140, 240, 340, 440),** initiate **(48)** an instability countermeasure **(4600)** based on the instability risk **(4900).**

**Example 2:** The computer system **(700)** of example 1, wherein the processing circuitry **(702)** is further configured to: identify **(46)** the instability risk **(4900)** by determining that a relative movement between the member target **(130, 230, 430)** and the surface target **(140, 240, 340, 440)** for the deployed stability member **(110, 210, 310, 410)** for a set time interval is outside a predefined threshold, and in response to the relative movement between said member target **(130, 230, 430)** and the surface target **(140, 240, 340, 440)** being outside said predefined threshold, determine **(52)** an instability countermeasure **(4600)** to be initiated **(48).**

**Example 3:** The computer system **(700)** of example 2, wherein the predefined threshold is associated with a maximum change in relative distance between the member target **(130, 230, 430)** and the surface target **(140, 240, 340, 440)** for one deployed stability member **(110, 210, 310, 410).**

**Example 4:** The computer system **(700)** of any of example 1-3, wherein the instability countermeasure **(4600)** comprises causing **(4602)** adjustment of the position of at least one of the one or more deployed stability members **(110, 210, 310, 410)** based on the target data **(42A).**

**Example 5:** The computer system **(700)** of example 4, wherein the instability countermeasure comprises causing adjustment of the one or more deployed stability members **(110, 210, 310, 410)** to push at least one of the one or more deployed stability members **(110, 210, 310, 410)** towards the surface **(S).**

**Example 6:** The computer system **(700)** of any of example 1-5, wherein the vehicle **(10)** further comprises a work attachment **(20)** operable upon deployment of the one or more deployed stability members **(110, 210, 310, 410);** wherein the determined instability countermeasure **(4600)** comprises at least one of rotating **(4603)** the work attachment **(20),** retracting **(4604)** the work attachment **(20)** and stopping **(4605)** movement of the work attachment **(20).**

**Example 7:** The computer system **(700)** of any of example 1-6, wherein the processing circuitry **(702)** is further configured to: determine a relative movement between a member target **(230, 430)** associated with a first deployed stability member **(210, 310, 410)** and a surface target **(240, 340, 440)** for the first deployed stability member **(210, 310, 410)** for a set time interval, determine a relative movement between a member target **(230, 430)** associated with a second deployed stability member **(210, 310, 410)** and a surface target **(240, 340, 440)** for the second deployed stability member **(210, 310, 410)** for a set time interval, and identify **(46)** an instability countermeasure **(4600)** based on said determined relative movements.

**Example 8:** The computer system **(700)** of example 7, wherein the processing circuitry **(702)** is configured to determine a relative angular movement between the first and second deployed stability member **(210, 310, 410)** based on: the determined relative movement between the member target **(230, 430)** associated with the first deployed stability member **(210, 310, 410)** and the surface target **(240, 340, 440)** for the first deployed stability member **(210, 310, 410),** and the determined relative movement between the member target **(230, 430)** associated with the second deployed stability member **(210, 310, 410)** and the surface target **(240, 340, 440)** for the second deployed stability member **(210, 310, 410),** wherein the processing circuity **(702)** is further configured to identify **(46)** the instability countermeasure **(4600)** based on the determined relative angular movement.

**Example 9:** The computer system **(700)** of example 7 or 8, wherein the first deployed stability member **(210, 310, 410)** is arranged at a first longitudinal side of the vehicle **(10)** and the second deployed stability member **(210, 310, 410)** is arranged at a second longitudinal side of the vehicle **(10)** opposite to the first side.

**Example 10:** The computer system **(700)** of example 7 or 8, wherein the first deployed stability member **(210, 310, 410)** is arranged at a front portion the vehicle **(10)** and the second deployed stability member **(210, 340, 410)** is arranged at a rear portion of the vehicle **(10)** opposite to the front portion.

**Example 11:** The computer system **(700)** of any of example 1-10, wherein the member target **(430)** and/or the surface target **(440)** is provided as a graphical pattern **(4301, 4401)** identifiable by the sensor system **(80, 280, 380, 480)** and provided on the deployed stability member **(410)** and the surface **(S),** respectively.

**Example 12:** The computer system of any of example 1-11, wherein the surface target **(240, 340, 440)** is provided at the surface **(S)** and is associated with a reference position of engagement between the surface **(S)** and the deployed stability member **(210, 310, 410),** the vehicle **(10)** further comprises a work attachment **(20)** operable upon deployment of the one or more deployed stability members **(210, 310, 410),** wherein the processing circuitry **(702)** is further configured to: determine a relative movement between a member target **(230, 430)** associated with a first deployed stability member **(210, 310, 410)** and a surface target **(240, 340, 440)** for the first deployed stability member **(210, 310, 410)** for a set time interval, determine a relative movement between a member target **(230, 430)** associated with a second deployed stability member **(210, 310, 410)** and a surface target **(240, 340, 440)** for the second deployed stability member **(210, 310, 410)** for a set time interval, and identify **(46)** an instability countermeasure **(4600)** based on said determined relative movements by selecting an instability countermeasure **(4600)** from a plurality of instability countermeasures, said instability countermeasures comprising any one of causing **(4602)** adjustment of the position of at least one of the one or more deployed stability members **(210, 310, 410)** based on the target data, rotating **(4603)** the work attachment **(20),** retracting **(4604)** the work attachment **(20),** stopping **(4605)** movement of the work attachment **(20)** and issuing **(4601)** an alert via a user interface **(384)** of the vehicle **(10).**

**Example 13:** Vehicle **(10)** comprising a one or more deployed stability member **(110, 210, 310, 410),** a sensor system **(80, 280, 380, 480)** and the computer system **(700)** of any of example 1-12.

**Example 14:** Vehicle **(10)** of example 13, wherein the sensor system **(80, 280, 380, 480)** comprises a camera monitoring system **(2800)** configured to monitor the member target **(130, 230, 430)** and the surface target **(140, 240, 340, 440)** and capture image data comprising the target data.

**Example 15:** A computer-implemented method **(1000)** comprising obtaining **(42),** by processing circuitry **(702)** of a computer system **(700),** from a sensor system **(80, 280, 380, 480)** of a vehicle **(10)** target data **(42A);** processing **(44)** the target data **(42A)** to identify: one or more member targets **(130, 230, 430)** associated with one or more deployed stability member **(110, 210, 310, 410)** of the vehicle **(10),** the one or more deployed stability members **(110, 210, 310, 410)** being configured to engage a surface **(S),** and one or more surface targets **(140, 240, 340, 440)** associated with the surface **(S),** identifying **(46)** an instability risk **(4900)** based on relative movement between the member target **(130, 230, 430)** and the surface target **(140, 240, 340, 440),** initiating **(48),** by the processing circuitry **(702),** an instability countermeasure **(4600)** based on the instability risk **(4900).**

**Example 16:** The computer-implemented method **(1000)** of example 15, further comprising: identifying the instability risk **(4900)** by determining, by the processing circuitry **(702),** that a relative movement between the member target **(130, 230, 430)** and the surface target **(140, 240, 340, 440)** for the deployed stability member **(110, 210, 310, 410)** for a set time interval is outside a predefined threshold, and in response to the relative movement between said member target **(130, 230, 430)** and the surface target **(140, 240, 340, 440)** being outside said predefined threshold, determining **(52),** by the processing circuitry **(702),** an instability countermeasure **(4600)** to be initiated **(46).**

**Example 17:** The computer-implemented method **(1000)** of example 15 or 16, further comprising: determining, by the processing circuitry **(702),** a relative movement between a member target **(230, 430)** associated with a first deployed stability member **(210, 310, 410)** and a surface target **(240, 340, 440)** for the first deployed stability member **(210, 310, 410)** for a set time interval, determining, by the processing circuitry **(702),** a relative movement between a member target **(230, 430)** associated with a second deployed stability member **(210, 310, 410)** and a surface target **(240, 340, 440)** for the second deployed stability member **(210, 310, 410)** for a set time interval, and identifying **(46),** by the processing circuitry **(702),** an instability countermeasure **(4600)** based on said determined relative movements.

**Example 18:** A computer program product comprising program code for performing, when executed by the processing circuitry, the method **(1000)** of any of example 15-17.

**Example 19:** A non-transitory computer-readable storage medium comprising instructions, which when executed by the processing circuitry, cause the processing circuitry to perform the method **(1000)** of any of example 15-17.

The terminology used herein is for the purpose of describing particular aspects only and is not intended to be limiting of the disclosure. As used herein, the singular forms "a," "an," and "the" are intended to include the plural forms as well, unless the context clearly indicates otherwise. As used herein, the term "and/or" includes any and all combinations of one or more of the associated listed items. It will be further understood that the terms "comprises," "comprising," "includes," and/or "including" when used herein specify the presence of stated features, integers, actions, steps, operations, elements, and/or components, but do not preclude the presence or addition of one or more other features, integers, actions, steps, operations, elements, components, and/or groups thereof.

It will be understood that, although the terms first, second, etc., may be used herein to describe various elements, these elements should not be limited by these terms. These terms are only used to distinguish one element from another. For example, a first element could be termed a second element, and, similarly, a second element could be termed a first element without departing from the scope of the present disclosure.

Relative terms such as "below" or "above" or "upper" or "lower" or "horizontal" or "vertical" may be used herein to describe a relationship of one element to another element as illustrated in the Figures. It will be understood that these terms and those discussed above are intended to encompass different orientations of the device in addition to the orientation depicted in the Figures. It will be understood that when an element is referred to as being "connected" or "coupled" to another element, it can be directly connected or coupled to the other element, or intervening elements may be present. In contrast, when an element is referred to as being "directly connected" or "directly coupled" to another element, there are no intervening elements present.

Unless otherwise defined, all terms (including technical and scientific terms) used herein have the same meaning as commonly understood by one of ordinary skill in the art to which this disclosure belongs. It will be further understood that terms used herein should be interpreted as having a meaning consistent with their meaning in the context of this specification and the relevant art and will not be interpreted in an idealized or overly formal sense unless expressly so defined herein.

It is to be understood that the present disclosure is not limited to the aspects described above and illustrated in the drawings; rather, the skilled person will recognize that many changes and modifications may be made within the scope of the present disclosure and appended claims. In the drawings and specification, there have been disclosed aspects for purposes of illustration only and not for purposes of limitation, the scope of the disclosure being set forth in the following claims.

## Claims

1. A computer system **(700)** comprising processing circuitry **(702)** configured to:
- obtain, **(42)** from a sensor system **(80, 280, 380, 480)** of a vehicle **(10),** target data **(42A);**
- process **(44)** the target data **(42A)** to identify:
one or more member targets **(130, 230, 430)** associated with one or more deployed stability member **(110, 210, 310, 410)** of the vehicle **(10),** the one or more deployed stability member **(110, 210, 310, 410)** of the vehicle **(10)** being configured to engage a surface **(S),** and
one or more surface targets **(140, 240, 340, 440)** associated with the surface **(S),**
- identify **(46)** an instability risk **(4900)** based on a relative movement between the member target **(130, 230, 430)** and the surface target **(140, 240, 340, 440),**
- initiate **(48)** an instability countermeasure **(4600)** based on the instability risk **(4900).**

2. The computer system **(700)** of claim 1, wherein the processing circuitry **(702)** is further configured to:
- identify **(46)** the instability risk **(4900)** by determining that a relative movement between the member target **(130, 230, 430)** and the surface target **(140, 240, 340, 440)** for the deployed stability member **(110, 210, 310, 410)** for a set time interval is outside a predefined threshold, and
- in response to the relative movement between said member target **(130, 230, 430)** and the surface target **(140, 240, 340, 440)** being outside said predefined threshold, determine **(52)** an instability countermeasure **(4600)** to be initiated **(48).**

3. The computer system **(700)** of claim 2, wherein the predefined threshold is associated with a maximum change in relative distance between the member target **(130, 230, 430)** and the surface target **(140, 240, 340, 440)** for one deployed stability member **(110, 210, 310, 410)**

4. The computer system **(700)** of any claim 1-3, wherein the instability countermeasure **(4600)** comprises causing **(4602)** adjustment of the position of at least one of the one or more deployed stability members **(110, 210, 310, 410)** based on the target data **(42A).**

5. The computer system **(700)** of claim 4, wherein the instability countermeasure comprises causing adjustment of the one or more deployed stability members **(110, 210, 310, 410)** to push at least one of the one or more deployed stability members **(110, 210, 310, 410)** towards the surface **(S).**

6. The computer system **(700)** of any of claim 1-5,
wherein the vehicle **(10)** further comprises a work attachment **(20)** operable upon deployment of the one or more deployed stability members **(110, 210, 310, 410);**
wherein the determined instability countermeasure **(4600)** comprises at least one of rotating **(4603)** the work attachment **(20),** retracting **(4604)** the work attachment **(20)** and stopping **(4605)** movement of the work attachment **(20).**

7. The computer system **(700)** of any of claims 1-6, wherein the processing circuitry **(702)** is further configured to:
- determine a relative movement between a member target **(230, 430)** associated with a first deployed stability member **(210, 310, 410)** and a surface target **(240, 340, 440)** for the first deployed stability member **(210, 310, 410)** for a set time interval,
- determine a relative movement between a member target **(230, 430)** associated with a second deployed stability member **(210, 310, 410)** and a surface target **(240, 340, 440)** for the second deployed stability member **(210, 310, 410)** for a set time interval, and
- identify **(46)** an instability countermeasure **(4600)** based on said determined relative movements.

8. The computer system **(700)** of claim 7, wherein the processing circuitry **(702)** is configured to determine a relative angular movement between the first and second deployed stability member **(210, 310, 410)** based on:
the determined relative movement between the member target **(230, 430)** associated with the first deployed stability member **(210, 310, 410)** and the surface target **(240, 340, 440)** for the first deployed stability member **(210, 310, 410),** and
the determined relative movement between the member target **(230, 430)** associated with the second deployed stability member **(210, 310, 410)** and the surface target **(240, 340, 440)** for the second deployed stability member **(210, 310, 410),**
wherein the processing circuity **(702)** is further configured to identify **(46)** the instability countermeasure **(4600)** based on the determined relative angular movement.

9. The computer system of any of claims 1-8, wherein:
the surface target **(240, 340, 440)** is provided at the surface **(S)** and is associated with a reference position of engagement between the surface **(S)** and the deployed stability member **(210, 310, 410),**
the vehicle **(10)** further comprises a work attachment **(20)** operable upon deployment of the one or more deployed stability members **(210, 310, 410),**
wherein the processing circuitry **(702)** is further configured to:
- determine a relative movement between a member target **(230, 430)** associated with a first deployed stability member **(210, 310, 410)** and a surface target **(240, 340, 440)** for the first deployed stability member **(210, 310, 410)** for a set time interval,
- determine a relative movement between a member target **(230, 430)** associated with a second deployed stability member **(210, 310, 410)** and a surface target **(240, 340, 440)** for the second deployed stability member **(210, 310, 410)** for a set time interval, and
- identify **(46)** an instability countermeasure **(4600)** based on said determined relative movements by selecting an instability countermeasure **(4600)** from a plurality of instability countermeasures, said instability countermeasures comprising any one of causing **(4602)** adjustment of the position of at least one of the one or more deployed stability members **(210, 310, 410)** based on the target data, rotating **(4603)** the work attachment **(20),** retracting **(4604)** the work attachment **(20),** stopping **(4605)** movement of the work attachment **(20)** and issuing **(4601)** an alert via a user interface **(384)** of the vehicle **(10).**

10. Vehicle **(10)** comprising a one or more deployed stability member **(110, 210, 310, 410),** a sensor system **(80, 280, 380, 480)** and the computer system **(700)** of any of claim 1-9.

11. A computer-implemented method **(1000)** comprising:
- obtaining **(42),** by processing circuitry **(702)** of a computer system **(700),** from a sensor system **(80, 280, 380, 480)** of a vehicle **(10)** target data **(42A);**
- processing **(44)** the target data **(42A)** to identify:
one or more member targets **(130, 230, 430)** associated with one or more deployed stability member **(110, 210, 310, 410)** of the vehicle **(10),** the one or more deployed stability members **(110, 210, 310, 410)** being configured to engage a surface **(S),** and
one or more surface targets **(140, 240, 340, 440)** associated with the surface **(S),**
- identifying **(46)** an instability risk (4900) based on relative movement between the member target **(130, 230, 430)** and the surface target **(140, 240, 340, 440),**
- initiating **(48),** by the processing circuitry **(702),** an instability countermeasure **(4600)** based on the instability risk **(4900).**

12. The computer-implemented method **(1000)** of claim 11, further comprising:
- identifying the instability risk **(4900)** by determining, by the processing circuitry **(702),** that a relative movement between the member target **(130, 230, 430)** and the surface target **(140, 240, 340, 440)** for the deployed stability member **(110, 210, 310, 410)** for a set time interval is outside a predefined threshold, and
- in response to the relative movement between said member target **(130, 230, 430)** and the surface target **(140, 240, 340, 440)** being outside said predefined threshold, determining **(52),** by the processing circuitry **(702),** an instability countermeasure **(4600)** to be initiated **(46).**

13. The computer-implemented method **(1000)** of claim 11 or 12, further comprising:
- determining, by the processing circuitry **(702),** a relative movement between a member target **(230, 430)** associated with a first deployed stability member **(210, 310, 410)** and a surface target **(240, 340, 440)** for the first deployed stability member **(210, 310, 410)** for a set time interval,
- determining, by the processing circuitry (702), a relative movement between a member target (230, 430) associated with a second deployed stability member (210, 310, 410) and a surface target (240, 340, 440) for the second deployed stability member (210, 310, 410) for a set time interval, and
- identifying (46), by the processing circuitry (702), an instability countermeasure **(4600)** based on said determined relative movements.

14. A computer program product comprising program code for performing, when executed by the processing circuitry, the method **(1000)** of any of claims 11-13.

15. A non-transitory computer-readable storage medium comprising instructions, which when executed by the processing circuitry, cause the processing circuitry to perform the method **(1000)** of any of claim 11-13.
